# EUROPEAN PATENT APPLICATION

(11) **EP 1 881 670 A1**
(43) Date of publication of application: **23.01.2008**
(21) Application number: 07012499.5
(22) Date of filing: 26.06.2007
(51) Int. Cl.: H04L 29/06, H04Q 7/38

(54) **Mobile communication terminal and method for authenticating data registration**

(30) Priority: 30.06.2006 KR 20060060775
(71) Applicant: LG Electronics Inc., Yongdungpo-Gu Seoul 150-010 (KR)
(72) Inventor: Yang, Hyun, Dong, Seoul (KR)
(74) Representative: Katérle, Axel

(57) **Abstract**

A communication terminal registers authentication data enabling the terminal to operate on a communications network in either a normal mode or a restricted mode. Authentication data from an authentication card installed in the terminal is checked to see if the data is already registered in the terminal. If registered, and if this data is also in a terminal database, then the terminal operates in a normal mode. If the data is not registered, and if the data is also in the terminal database, then authentication data is requested from the network and compared with the data stored on the authentication card. If the same, then the authentication data is registered in the terminal and the terminal operates in the normal mode. If the data is not the same as stored in the database or the network, the authentication data is not registered and the terminal operates in a restricted mode.

## Description

### FIELD OF THE INVENTION

The present invention relates to a mobile communication terminal having an authentication data registration function and a method of registering authentication data.

### DISCUSSION OF THE RELATED ART

According to subscriber identification information received from each mobile communication terminal, a mobile communication service provider authenticates service use and charges a fee. Service use information, including the subscriber identification information, is stored in a card media. The card media is mounted in the mobile communication terminal to provide roaming service for the terminal.

The card media may be a Subscriber Identity Module (SIM) card of a Global System for Mobile communication (GSM) system, a Universal Subscriber Identity Module (USIM) card of a Universal Mobile Telecommunication System (UMTS), a User Identity Module (UIM) card, or a Removable User Identity Module (RUIM) of a Code Division Multiple Access (CDMA) system.

A user authentication card stores data such as user information, enterprise information, an encryption key, location information, or a telephone directory, among other information. When the user authentication card is powered on, the terminal performs its initialization routine, and when complete, the terminal transmits the subscriber identification information to the mobile communication provider over a mobile communication network. The mobile communication provider then authenticates service use.

However, some terminals only may be used on communication networks in particular countries or with particular communication service providers. In order to determine whether a service may be supplied to the terminals, authentication data necessary for validating the user authentication card is pre-stored in the terminal. As part of the terminal initialization procedure, the authentication data stored in the mobile communication terminal is compared with information stored in the user authentication card. For example, if use of a terminal is restricted to a particular communication network or a particular service provider of a particular country, and a country code and a service provider code of the user authentication card are not registered in the terminal, use of the terminal with the corresponding user authentication card will be restricted.

However, even though the service providers are the same, the country code and the service provider code may be different. In this case, if the authentication data is pre-stored in the terminal, use of the terminal may be restricted in spite of the same country and service provider. This is because a form of the authentication data stored in the authentication card is different from that of the authentication data stored in the terminal.

### SUMMARY OF THE INVENTION

The present invention provides a mobile communication terminal having an authentication data registration function, which enables authentication data to be directly registered by the terminal in a form that corresponds to the terminal's environment. The user authentication card may be authenticated even if alternative forms of authentication data stored in the terminal are different from the data stored on the authentication card.

Additional advantages, objects and features of the invention will be set forth in part in the description which follows and in part will become apparent to those having ordinary skill in the art upon examination of the following or may be learned from practice of the invention.

In an aspect of the present invention, a method for registering authentication data in a mobile communications terminal comprises determining whether a first authentication data stored on a user authentication card installed in the terminal is registered when the terminal is powered on. If the first authentication data is not registered, then determining whether the first authentication data is also stored in an authentication data database of the terminal. If the first authentication data is also stored in the authentication data database, then the method further includes requesting a second authentication data from an authentication center of a mobile communication network, and receiving the second authentication data. Another operation includes determining whether the first and second authentication data correspond to each other, and if the first and second authentication data correspond to each other, then registering the first authentication data as the authentication data necessary for authenticating the user authentication card, and operating the terminal in a normal mode.

In another aspect of the invention, if the first authentication data is registered, another operation includes determining whether the first authentication data is also stored in an authentication data database of the terminal. If the first authentication data is also stored in the authentication data database, then another operation includes operating the terminal in the normal mode. If the first authentication data is not stored in the authentication data database, then a further operation includes operating the terminal in a restricted mode.

In yet another aspect of the invention, if the first authentication data is not stored in the authentication data database, then a further operation includes operating the terminal in a restricted mode.

In still another aspect of the invention, if the first authentication data does not correspond to the second authentication data, then a further operation includes operating the terminal in the restricted mode.

The database of the terminal may comprise different forms of authentication data having the same information. Specifically, the first and second authentication data each comprises a Mobile Country Code (MCC) and a Mobile Network Code (MNC). The user authentication card is at least one of a Subscriber Identity Module (SIM) card of a Global System for Mobile communication (GSM) system, a Universal Subscriber Identity Module (USIM) card of a Universal Mobile Telecommunication System (UMTS), a User Identity Module (UIM) card, and a Removable User Identity Module (RUIM) of a Code Division Multiple Access (CDMA) system.

### BRIEF DESCRIPTION OF THE DRAWINGS

The above and other objects, features and advantages of the present invention will be more apparent from the following detailed description taken in conjunction with the accompanying drawings, in which:

FIG. 1 is a block diagram of a mobile communication terminal having an authentication data registration function according to embodiments of the present invention.

FIG. 2 is a flow chart of a method for registering authentication data in the mobile communication terminal according to embodiments of the present invention.

FIG. 3 is a flow chart of a method for controlling a user authentication card of the mobile communication terminal according to embodiments of the present invention.

### DETAILED DESCRIPTION

The aspects and features of the present invention and methods for achieving the aspects and features will be apparent by referring to the embodiments described in detail with reference to the accompanying drawings. However, the present invention is not limited to the embodiments disclosed hereinafter, but can be implemented in diverse forms. The matters defined in the description, such as the detailed construction and elements, are only specific details provided to assist those of ordinary skill in the art in a comprehensive understanding of the invention, and the present invention is only defined within the scope of the appended claims. In the description of the present invention, the same drawing reference numerals are used for the same elements across various figures.

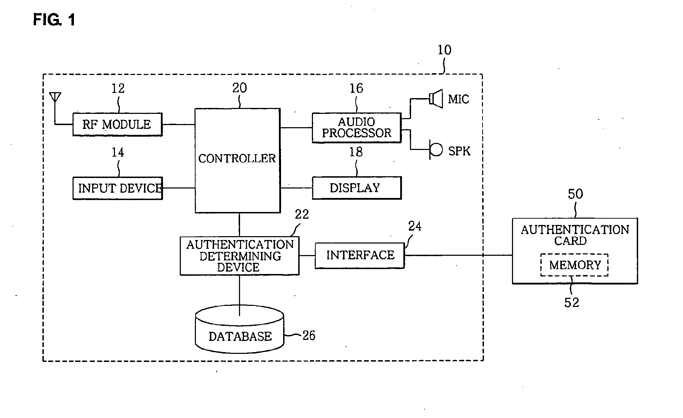

The present invention will be described in detail with reference to the accompanying drawings. FIG. 1 is a block diagram illustrating a terminal having an authentication data registration function according to one aspect of the present invention. A user authentication card 50 is inserted into the terminal 10, and may be issued, managed, and operated separately from the terminal 10. The authentication card 50 also includes a memory 52 for storing authentication data.

The memory 52 stores data that may include International Mobile Station Identity (IMSI) information, an encryption key, location information, and a telephone directory. IMSI information is unique information identifying each subscriber, and includes a Mobile Country Code (MCC), a Mobile Network Code (MNC), and a Mobile Station Identifier Number (MSIN).

The terminal 10 includes a wireless transmitting/receiving RF module 12, an audio processor 16 for processing an audio signal provided to a speaker (SPK) and provided from a microphone (MIC), an input device 14 for receiving data from the user, a display 18 for displaying data, and a controller 20 for controlling each of the components to perform the terminal functions.

The terminal 10 includes an interface 24 for physically connecting the authentication card 50 to the terminal 10, and an authentication determining device 22 for determining whether the authentication card 50 is valid by comparing authentication data stored in the authentication card 50 with authentication data stored in a database (DB) 26 under the control of the controller 20.

The RF module 12 transmits and receives a wireless signal via a mobile communication network for providing a mobile communication service, and transmits a registration request signal to an authentication center (not shown) of the mobile communication network to receive authentication data from the authentication center.

The input device 14 provides user supplied data to the controller 20, and may be a keypad comprising alphanumeric and function keys.

The audio processor 16 processes a digital signal received from the RF module 12 to provide an audio signal to a speaker (SPK), and converts an analog signal provided from the microphone (MIC) into a digital signal sent to the controller 20.

The display 18 displays the condition of the terminal 10, data selected by the user, and the results of RF signals received by the RF module 12.

The DB 26 stores authentication data to compare with authentication data stored in the authentication card 50. For example, if the terminal 10 is to be used in a specific country, the DB 26 stores a list of various forms of Mobile Country Codes (MCCs) representing countries in which the terminal 10 can be normally operated. Moreover, if the terminal can use a service provided by a specific service provider within the mobile communication network, the mobile network codes for each service provider are stored in the DB 26. This authentication database 26 may be stored in terminal 10, and is updated through the mobile communication network or through external devices such as a computer.

The authentication determining device 22 compares authentication data read from the authentication card 50 with authentication data stored in the DB 26 and provides the comparison results to the controller 20 when the mobile communication terminal 10 is initialized. If the authentication data is stored in different forms, the authentication determining device 22 searches for the authentication data stored in the DB 26 to determinate whether the authentication data is stored or not. The authentication determining device 22 may be implemented with a separate module, or with software embedded in the controller 20.

The controller 20 determines whether the authentication card 50 can be used when the authentication card 50 is inserted into the terminal 10. If authentication data necessary for authenticating the authentication card 50 has been already registered, the controller 20 also determines whether the authentication card 50 can be used by comparing the registered authentication data with authentication data stored in the authentication card.

If authentication data is not registered, a registration process is performed for the authentication data. First, the authentication determining device 22 determines whether the same authentication data as the authentication data stored in authentication card 50 is stored in the DB 26. If so, the controller 20 requests a registration of the terminal 10 to an authentication center (not shown) of the mobile communication network and compares the authentication data of the authentication card 50 with information received from the authentication center. If the received information and the authentication data on the authentication card correspond, the controller 20 registers the authentication data, performs the terminal initialization procedure, and enables normal terminal operation. If each of the MCC and MNC of the authentication card 50, the DB 26 and the authentication center correspond, the controller 20 registers the MCC and MNC as the authentication data. If the MCC and MNC are registered, the terminal 10 can be used normally when the MCC and MNC of the authentication card 50 match the registered MCC and MNC.

If the controller 20 determines the authentication data of the authentication card 50 is not stored in the DB 26, the use of the mobile communication network is restricted. Further, if information received from the authentication center of the mobile communication network does not correspond to the authentication data of the authentication card 50, the controller 20 restricts the registration of the authentication data and restricts the use of the terminal on the mobile communications network.

Also, if authentication of the authentication card 50 fails, the initialization of the mobile communication terminal 10 can be performed under the control of the controller 20. For example, if the MCC and MNC read from the authentication card 50 are not included in the list of the MCC and MNC stored in the DB 26, the registration of the authentication data is stopped. Further, if the MCC and MNC received from the authentication center of the mobile communication network do not correspond to the MCC and MNC of the authentication card 50, the authentication data is not registered in the mobile communication terminal 10.

If all of the authentication data stored in the memory 52, the DB 26 and the authentication center (not shown) correspond, the authentication data is registered in the terminal 10. If the authentication data stored in memory 52, the DB 26 and the authentication center (not shown) do not correspond, the registration of the authentication data is stopped. Accordingly, the terminal 10 determines the use of the authentication card 50 is not allowed, and the terminal 10 operates in a restricted mode.

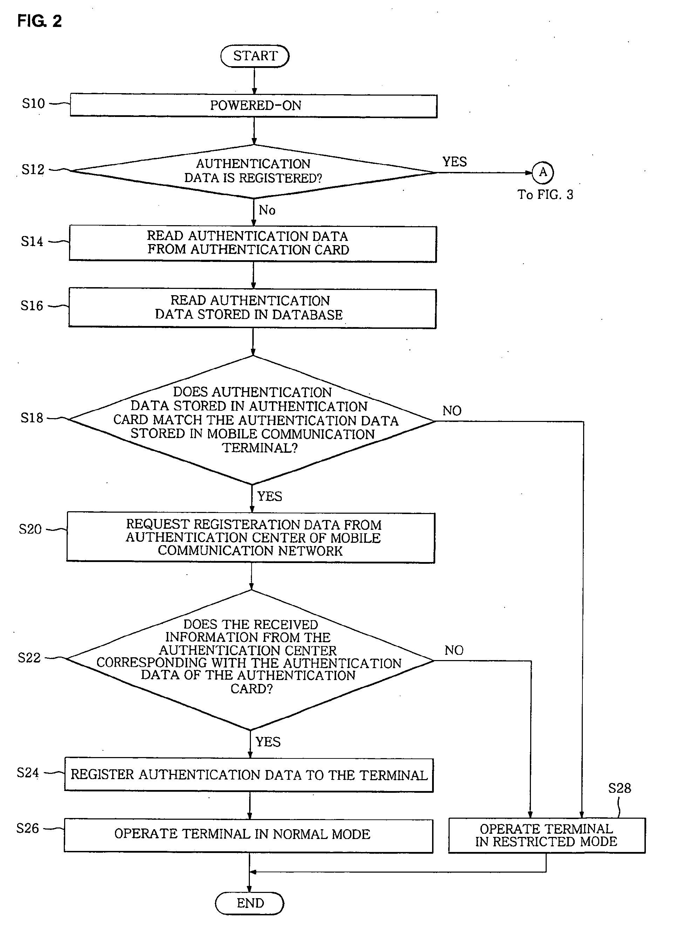

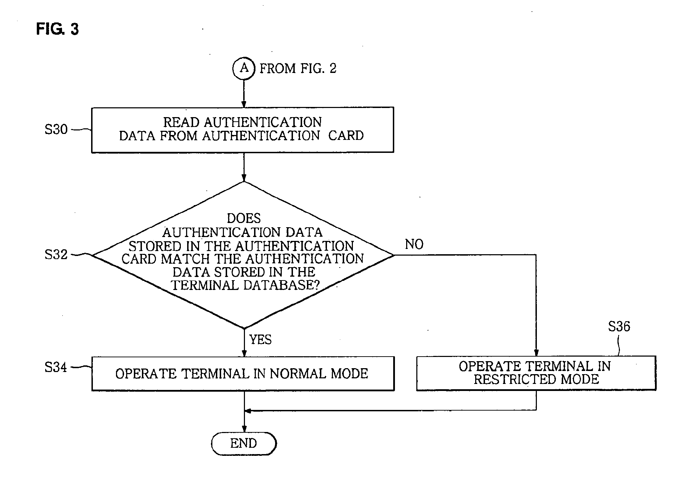

FIG. 2 shows a method for registering authentication data in the mobile communication terminal according to one aspect of the present invention. When the terminal 10 is powered on (S10), the controller 20 determines whether authentication data is registered in the terminal 10 (S12). FIG. 3 shows when the authentication data has already been registered in the mobile communication terminal 10.

Referring again to FIG. 2, if the authentication data is not registered, the controller 20 reads the authentication data (S14) from the authentication card 50 and extracts the MCC and MNC from the IMSI to determine which country or service provider issued the authentication card 50.

The controller 20 then reads authentication data such as the MCC and MNC stored in the DB 26 (S16). The MCC and MNC may be represented differently by a country, a region, a manufacturing company, and so on. The controller 20 determines through an authentication determining device 22 whether the MCC and MNC read from the authentication card 50 are stored in the DB 26 (S18).

If the authentication data of the authentication card 50 is not stored in the DB 26, the controller 20 recognizes that the presently inserted authentication card 50 cannot be used within the mobile communication network (S18). Accordingly, the registration of the authentication data is stopped, the terminal 10 is initialized under the control of the controller 20 (S28), and the terminal 10 is operated in the restricted mode.

If the authentication data of the authentication card 50 is stored in the DB 26, the controller 20 requests the authentication data from the authentication center (S20). Upon the request of the authentication data, the terminal 10 receives MCC and MNC codes from the authentication center of the mobile communication network.

Additionally, the terminal 10 determines whether the information received from the authentication center and the authentication data of the authentication card correspond (S22). In other words, the controller 20 determines whether the MCC and MNC received from the controller 20 correspond to the MCC and MNC read from the authentication card 50. Then, the controller 20 determines whether the authentication card 50 can be used within the mobile communication network of the country or service provider and that the service is presently available.

If the received information and the authentication data of the authentication card 50 correspond, the controller 20 registers the authentication data to the terminal 10 (S24). In other words, the MCC and MNC, all of which correspond to the authentication card 50, the terminal 10, and the authentication center, are registered to the terminal 10. The use of the authentication card 50 may be restricted (S28) if where the MCC and MNC registered to the terminal 10 are different from those read from the authentication card.

If the registration of the authentication data is completed, the authentication card 50 can be used. Accordingly, the mobile communication terminal 10 may be operated normally (S26).

Returning back to block S22, if the received information from the authentication center and the authentication data of the authentication card 50 do not correspond, the controller 20 determines the authentication card 50 as an authentication card where the service use is restricted, and stops the registration of the authentication data. Accordingly, the use of the terminal 10 is restricted (S28). Consequently, the controller 20 performs the initialization of the mobile communication terminal 10.

As described above, embodiments of the present invention include the DB 26 for storing the MCC and MNC that may be represented in different forms. Even if the MCC and MNC are stored in different forms according to the issue region, the manufacturing company, and so on, a terminal may determine whether the authentication data is compatible, and then again determines the compatibility of the authentication data using information received from the authentication center for registering the MCC and MNC as the authentication data. As such, the controller 20 determines whether to use the authentication card 50 based on the authentication data that is directly registered by the terminal 10, so that the authentication card may be authenticated.

FIG. 3 shows a method for controlling a user authentication card of the mobile communication terminal according to another aspect of the present invention. Referring briefly to FIG. 2, when the terminal is powered on (S10), the controller 20 determines whether the authentication data is registered in the terminal 10 (S12).

When the authentication data is registered in the terminal 10, the controller 20 reads the authentication data from the authentication card 50 (S30) and compares this authentication data with the data stored in the terminal database 26. In other words, the MCC and MNC codes stored in the terminal database are compared with the MCC and MNC codes stored on the authentication card 50.

By comparing the authentication data stored in the terminal database 26 with the authentication data read from the authentication card 50, the controller 20 determines whether the authentication card 50 is available (S32). In other words, the MCC and MNC stored in the terminal database 50 are compared with the MCC and MNC read from the authentication card 50, as described in the FIG. 2.

If the authentication data stored in the terminal database 26 corresponds to the authentication data read from the authentication card 50, the use of the authentication card 50 is allowed by the controller 20, which permits the mobile communication terminal 10 to operate normally (S34).

If the authentication data stored in the terminal database 29 does not correspond to the authentication data read from the authentication card 50, the controller 20 restricts the use of the terminal 10 by indicating that the authentication card 50 is not available (S36).

As described above, according to embodiments of the present invention, the terminal 10 itself collects and registers the authentication data, and performs the authentication for the authentication card 50. Accordingly, even if the same authentication data is used in different forms according to region, manufacturing company, and service provider, the authentication card 50 can be authenticated by directly registering the authentication data that correspond with the local environment.

The terminal having 10 the authentication data registration function and the method for registering the authentication data thereof produce the following effect.

The authentication card 50 may be authenticated by directly registering the authentication data necessary for authenticating the authentication card 50 to the terminal 10 in a form that corresponds with the local environment.

Therefore, even if the form of the authentication data stored in the user authentication card 50 does not correspond to that of the authentication data pre-stored in the mobile communication terminal 10, the authentication card 50 inserted into the terminal can be authenticated.

The embodiments of the present invention have been described for illustrative purposes, and those skilled in the art will appreciate that various modifications, additions and substitutions are possible without departing from the scope and spirit of the invention as disclosed in the accompanying claims. Therefore, the scope of the present invention should be defined by the appended claims and their legal equivalents.

## Claims

1. A method for registering authentication data in a mobile terminal, the method comprising:
determining whether first authentication data stored on a user authentication card coupled to the terminal is registered; and
if the first authentication data is not registered, determining whether the first authentication data is stored in a data database associated with the terminal, and if the first authentication data is stored in the database, requesting and receiving second authentication data from a communication network with which the terminal is in communication, and registering the first authentication data as the authentication data necessary for authenticating the user authentication card if the first and second authentication data correspond.

2. The method of claim 1, further comprising:
operating the terminal in a normal mode after authenticating the user authentication card.

3. The method of claim 1, further comprising:
determining whether the first and second authentication data correspond.

4. The method of claim 1, further comprising:
requesting the second authentication data from an authentication center associated with the communication network.

5. The method of claim 1, further comprising:
if the first authentication data is registered, determining whether the first authentication data is also stored in an authentication data database of the terminal, and operating the terminal in one of a normal mode or a restricted mode, wherein the terminal is operated in the normal mode if he first authentication data is stored in the authentication data database, and wherein the terminal is operated in the restricted mode if the first authentication data is not stored in the authentication data database.

6. The method of claim 1, further comprising:
operating the terminal in a restricted mode if the first authentication data is not stored in the authentication data database.

7. The method of claim 1, further comprising:
operating the terminal in a restricted mode if the first authentication data does not correspond to the second authentication data.

8. The method of claim 1, wherein the database comprises different forms of authentication data having the same information.

9. The method of claim 1, wherein the first and second authentication data each comprises a Mobile Country Code (MCC) and a Mobile Network Code (MNC).

10. The method of claim 1, wherein the user authentication card is one of a Subscriber Identity Module (SIM) card, a Universal Subscriber Identity Module (USIM) card, a User Identity Module (UIM) card, and a Removable User Identity Module (RUIM) card.

11. A mobile terminal comprising:
a wireless transmitting/receiving RF module;
an authentication card configured to store a first authentication data for authenticating service use of the terminal;
an interface configured to receive the authentication card and to couple the authentication card to the terminal;
a database configured to store second authentication data;
a determining device configured to determine whether the first authentication data is also stored in the database; and
a controller configured to request third authentication data from a communication network via the RF module when the first authentication data is stored in the database, and the controller registers the first authentication data as the data for authenticating the user authentication card and operates the terminal in a normal mode if the if the first authentication data and the third authentication data correspond.

12. The terminal of claim 11, wherein the if the first authentication data is registered, the controller determines whether the first authentication data is also stored in the database, if the first authentication data is also stored in the authentication data database, operates the terminal in the normal mode, and if the first authentication data is not stored in the authentication data database, operates the terminal in a restricted mode.

13. The terminal of claim 11, wherein the controller operates the terminal in a restricted mode if the first authentication data is not stored in the authentication data database.

14. The terminal of claim 11, wherein the controller operates the terminal in a restricted mode if the first authentication data does not correspond to the second authentication data.

15. The terminal of claim 11, wherein the database stores comprises different forms of authentication data having the same information.

16. The terminal of claim 11, wherein the first and second authentication data each comprises a Mobile Country Code (MCC) and a Mobile Network Code (MNC).

17. The terminal of claim 11, wherein the user authentication card is one of a Subscriber Identity Module (SIM) card, a Universal Subscriber Identity Module (USIM) card, a User Identity Module (UIM) card, and a Removable User Identity Module (RUIM) card.
